# EUROPEAN PATENT APPLICATION

(11) **EP 2 218 911 A1**
(43) Date of publication of application: **18.08.2010**
(21) Application number: 09152734.1
(22) Date of filing: 12.02.2009
(51) Int. Cl.: F03D 11/00, F16M 1/08

(54) **Housing with a special connection assembly as well as a method for manufacturing such a housing.**

(71) Applicant: Deen Polyester Constructies B.V., 8304 AH Emmeloord (NL)
(72) Inventor: Stegge, Johanna Maria, 9226 TS Lelystad (NL)
(74) Representative: Hatzmann, Martin

(57) **Abstract**

A housing (10) comprising a first (12) and a second (16) housing shell (12,16) of a composite plastic material. A connection assembly (20) is configured to connect a first housing edge (14) of the first housing shell (12) with the second housing edge (18) of the second housing shell (16). The connection assembly includes a first and a second connection profile (22,26) that is partly embedded in the associated first and second housing shell adjacent the associated first and second housing edge. The first and second connection profiles provide a first and a second contact surface (24,28) respectively. The housing shells with the connection profiles embedded therein may the nested during transportation. For connection of the housing shells an adhesive layer extends between the first and the second profile, more particularly between the first and the second contact surfaces. A method for manufacturing a housing including at least a first and second housing shell is also described.

## Description

### Field

The invention relates to a housing including a first and a second housing shell of a composite plastic material.

### Background

A housing including a number of housing shells that are manufactured of a composite plastic material are known in the art. For example, applicant is selling a housing that may be used as a housing for the nacelle of a wind generator. This is just an example of a typical application of such a housing. Housings including housing shells made of composite plastic material may also be applied for accommodating machines, spaces, and the like. A nacelle of a wind generator may be fairly large. Typical dimensions are in the order of 3-8 meters wide and high and 3-13 meter long. Consequently, a housing has to be manufactured from various housing shells because the manufacture, transport and handling of a one piece housing is impossible or at least impractical. Presently, the individual housing shells have connecting flanges at the edges of the housing shells that need to be connected to a frame or to each other. These flanges extend perpendicular to the housing shell wall adjacent the edge that is associated with the flange. These perpendicularly extending flanges impede the nesting of the housing shells into each other. Nesting of the housing shells is desirable when the housing shells have to be transported. Because the nesting of two or more housing shells is not really possible, more transport space is needed for transporting the known housing shells, which is costly. In practice, it has also occurred that the perpendicularly extending flanges are vulnerable and may be damaged during transport.

It is a challenge to provide a housing in which the above drawbacks are alleviated or overcome.

### Summary of the invention

To that end the invention provides a housing comprising:
a first housing shell of a composite plastic material having at least one first housing edge, the first housing shell adjacent the first housing edge extending in a first virtual plane;
a second housing shell of a composite plastic material having at least one second housing edge, the second housing shell adjacent the second housing edge extending in the first virtual plane;
a connection assembly configured to connect the first housing edge with the second housing edge, the connection assembly including:
   a first connection profile connected with the first housing shell adjacent the first housing edge by being partly embedded in the first housing shell, the first connection profile providing a first contact surface extending in or parallel to the first virtual plane;
   a second connection profile connected with the second housing shell adjacent the second housing edge by being partly embedded in the second housing shell, the second connection profile providing a second contact surface extending in or parallel to the first virtual plane; and
   an adhesive layer extending between and connecting the first and the second profile via the first and the second contact surfaces.

Because the first and second connection profile, more particular the associated first and second contact surfaces thereof extend in or parallel to the first virtual plane, the first and the second housing shells may be nested. In other words, because the first and the second housing shells do not have flanges adjacent their edges to be connected that extend perpendicular to the housing shell wall adjacent the edge, nesting of the housing shells is feasible. Additionally, the chances that the connection profiles will be damaged during transport is minimized because the main parts of the connection profiles extend in or parallel to the virtual plane in which also the housing shells extend adjacent the edges to be connected. This is in contrast to the known vulnerable flanges that extend perpendicular to the adjacent housing shell wall.

In another aspect, the invention provides a method of manufacturing a housing including:
providing a first mold;
providing a first connection profile;
placing the first connection profile in the first mold;
applying composite plastic material in the first mold to form a first housing shell with the first connection profile at least partly embedded therein at a first housing shell edge;
hardening the composite plastic material; and
removing the first housing shell with the first connection profile from the mold;
providing a second mold;
providing a second connection profile;
placing the second connection profile in the second mold;
applying composite plastic material in the second mold to form a second housing shell with the second connection profile at least partly embedded therein at a second housing shell edge;
hardening the composite plastic material; and
removing the second housing shell with the second connection profile from the mold;
connecting the first and the second housing shell via a connection assembly including the first and the second connection profile and an adhesive layer extending between and connecting the first an the second profile;
wherein the housing in the mounted condition includes that:
the first housing shell adjacent the first housing shell edge extends in a first virtual plane;
the second housing shell adjacent the second housing shell edge extends in the first virtual plane;
the first connection profile provides a first contact surface extending in or parallel to the first virtual plane;
the second connection profile provides a second contact surface extending in or parallel to the first virtual plane; and that
the adhesive layer extends between and connects the first and the second contact surfaces.

With this method a robust and durable housing may be formed of which the housing shells with the connection profiles embedded therein may be transported in a nested and thus compact configuration.

These and other features and advantages of the invention will be more fully understood from the following detailed description of certain embodiments of the invention, taken together with the accompanying drawings, which are meant to illustrate and not to limit the invention.

### Brief Description of the Drawings

Fig. 1 shows a perspective view of a part of a prior art housing;
Fig. 2 shows a perspective view of an embodiment of a housing adjacent the connection of two neighboring housing shells from the outside of the housing;
Fig. 3 shows a perspective view of the embodiment of Fig. 2 adjacent the connection of two neighboring housing shells from the inside of the housing;
Fig. 4 shows a cross-section through an embodiment of the connection assembly in a connected condition;
Fig. 5 shows a cross-section through a second example of an embodiment of the connection assembly in a connected condition; and
Figs 6A-6C show the various steps of manufacturing an embodiment of a first housing shell with a first connection profile.

### Detailed Description

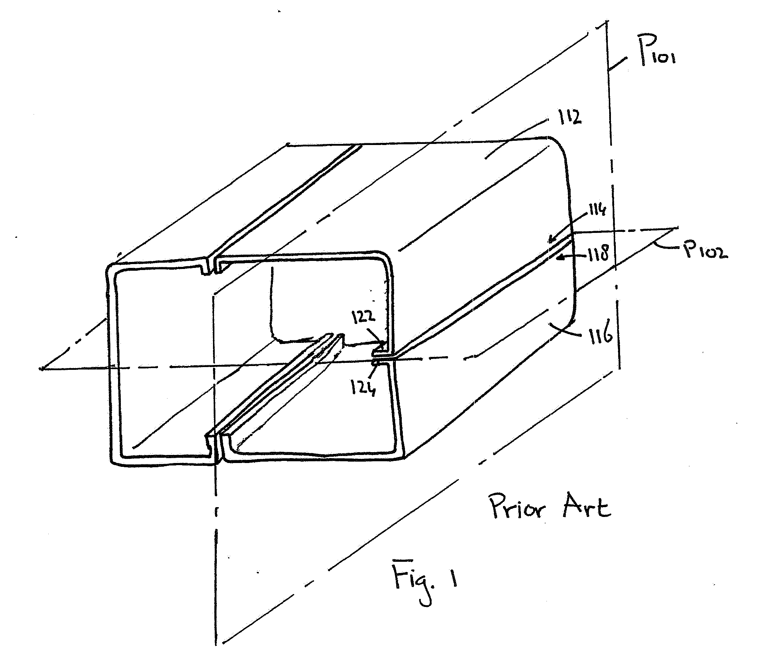

Fig. 1 shows a perspective view of a part of an embodiment of a prior art housing. The prior art housing includes a first housing shell 112 and a second housing shell 116. In the example shown, the embodiment additionally includes a third housing shell. The first housing shell 112 has an edge 114 at which the first housing shell extends in a first virtual plane P101. The second housing shell 116 has an edge 118 at which the second housing shell 116 also extends in the first virtual plane P101. The first housing shell 112 includes a first connection flange 122 that extends parallel to a second virtual plane P102 that is substantially perpendicular to the first virtual plane P101. The second housing shell 116 includes a second connection flange 124 that extends parallel to the second virtual plane P102. In a mounted condition of the housing the first and second flanges 122, 124 may be bolted together or be connected to a frame. The connection between the first and the second flanges 122, 124 may also be effected by adhesive. The perpendicularly extending flanges 122, 124 impede the possibility of nesting the housing shells. Further, the flanges 122, 124 are vulnerable to damage during transport.

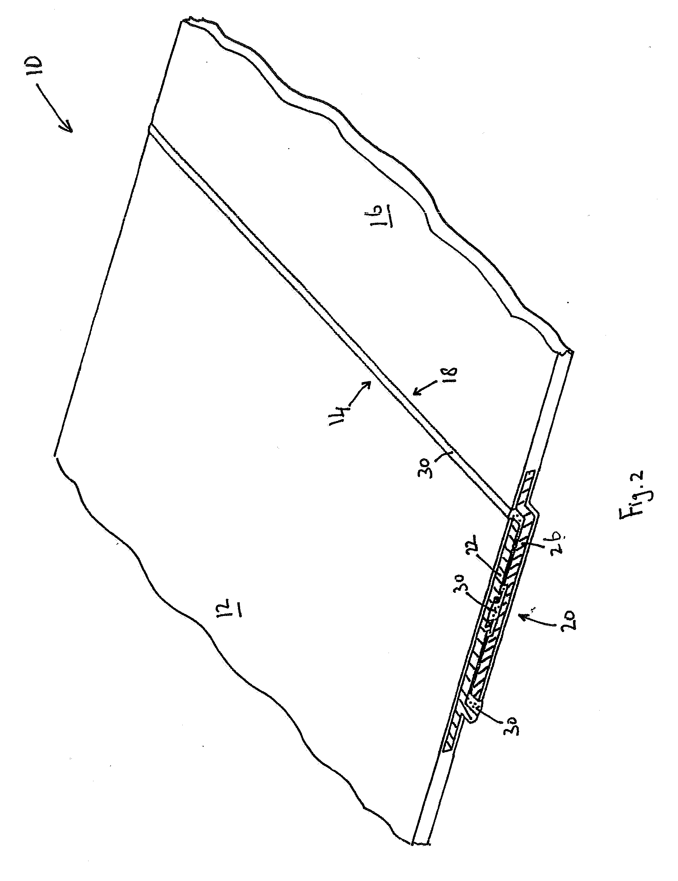

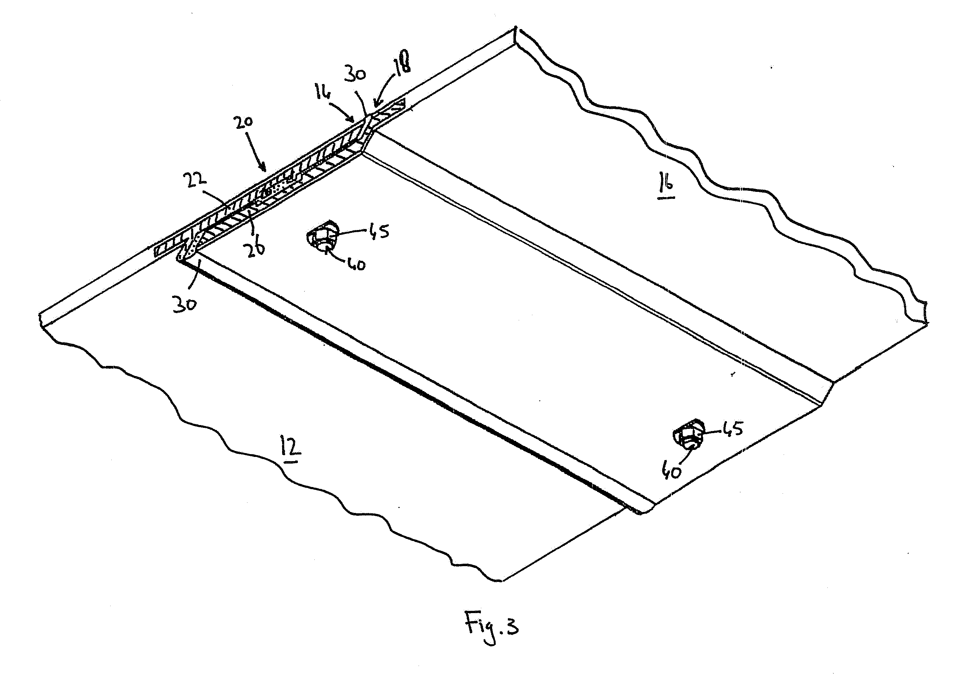

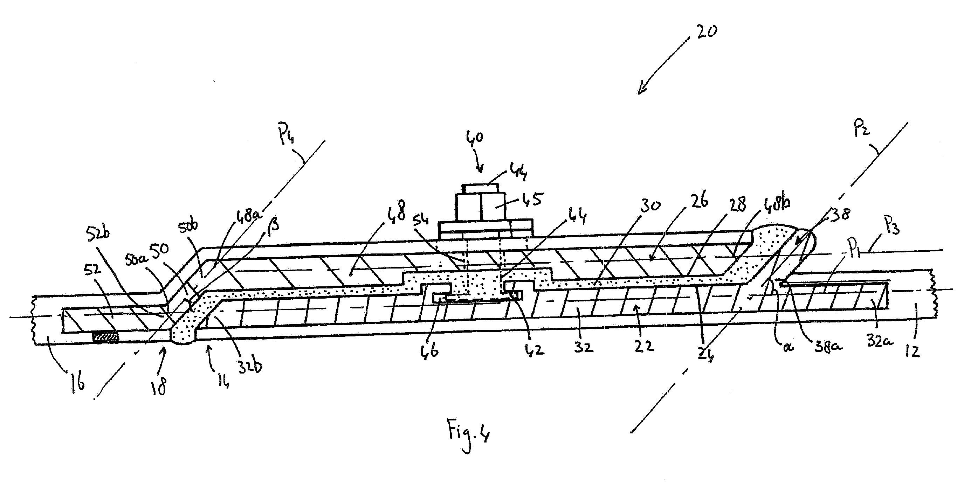

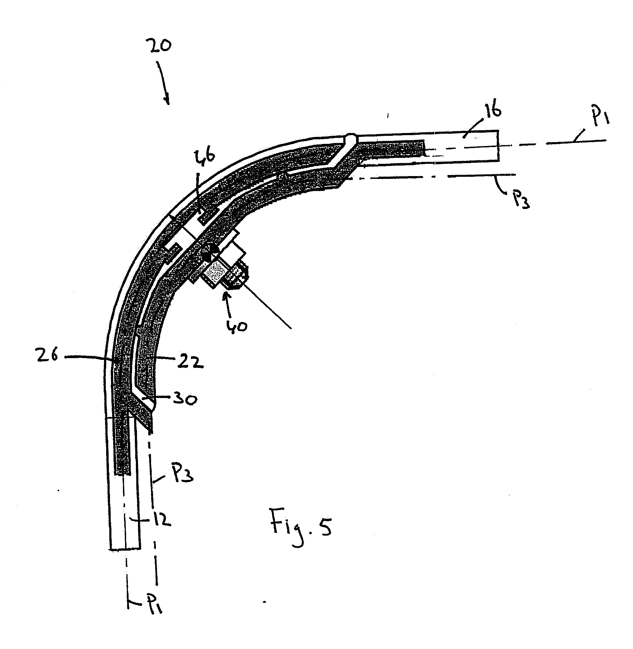

In an embodiment of the housing according to the invention, of which a first example is shown in Figs. 2-4 and a second example is shown in Fig. 5, the housing 10 includes a first housing shell 12 of a composite plastic material having at least one first housing edge 14. The first housing shell 12 adjacent the first housing edge 14 extends in a first virtual plane P1. The embodiment also includes a second housing shell 16 of a composite plastic material having at least one second housing edge 18. The second housing shell extends adjacent the second housing edge 18 in the first virtual plane P1. It should be noted that the virtual plane P1 may also be of a curved configuration as shown in the second example shown in Fig. 5. Further, a connection assembly 20 is provided that is configured to connect the first housing edge 14 with the second housing edge 18. The connection assembly 20 includes a first connection profile 22 connected with the first housing shell 12 adjacent the first housing edge 14 by being partly embedded in the first housing shell 12. The first connection profile 22 provides a first contact surface 24 extending in or parallel to the first virtual plane P1. Thus in the first example shown in Figs. 2-4 the first contact surface 24 is straight and in the second example shown in Fig. 5 the first contact surface 24 is curved. The connection assembly also includes a second connection profile 26 connected with the second housing shell 16 adjacent the second housing edge 18 by being partly embedded in the second housing shell 16. The second connection profile 26 provides a second contact surface 28 extending in or parallel to the first virtual plane P1. Again, as shown in the first example of Figs 2-4, the second contact surface 28 is straight and in the second example of Fig. 5, the second contact surface 28 is curved. Additionally, the connection assembly 20 includes an adhesive layer 30 that extends between and connects the first and the second profile 22, 26 via the first and the second contact surfaces 24, 28.

In an embodiment, of which an example is shown in the figures, the first connection profile 22 may include a substantially flat profile body 32 having a proximal edge 32a that faced to the first housing shell 12 and a distal edge 32b that is faced away from the first housing part 12. As shown in the first example the flat profile body 32 may be straight. Alternatively, the flat profile body 32 may be curved as shown in the second example of Fig. 5. The substantially flat profile body extends in the first virtual plane P1. The first connection profile 22 may include a support arm 38 having a first edge 38a via which the support arm 38 is integrally connected with the substantially flat profile body 32 between the proximal edge 32a and the distal edge 32b thereof. The support arm 38 may be substantially flat and may extend in a second virtual plane P2 that includes a first angle α with the first virtual plane P1. A T-slit 46 may be integrally formed in the first connection profile 22 and is configured to accommodate a bolt head 42, for example a hammer head shaped bolt head, of a connection bolt 40 also having a bolt shaft 44. A nut 45 may be used in co-operation with the bolt 40 to fixate the first and the second connection profiles 22, 26 relative to each other when the adhesive layer 30 is still in the process of hardening.

In an embodiment, of which two examples are shown in the figures, the second connection profile 26 may include a flat first body part 48 that extends in a third virtual plane P3 that is parallel to the first virtual plane P1. The third virtual plane P3 may be straight, as shown in the first example of Figs. 2-4. Alternatively, the third virtual plane P3 may be curved, as shown in the second example of Fig. 5. The first body part 48 may have a proximal edge 48a that is faced to the second housing shell 16 and a distal edge 48b that is faced away from the second housing shell 16. The first body part 48 of the second connection profile 26 may include at least one hole 54 for accommodating an associated bolt shaft 44 of a said connection bolt 40. The second connection profile 26 may additionally include a transition part 50 that may have a distal transition part edge 50b that is connected with the proximal edge 48a of the first body part 48 and a proximal transition part edge 50a that extends parallel to the distal transition part edge 50a on an opposite side of the transition part 50. The transition part 50 may be substantially flat and extend in a fourth virtual plane P4 that includes a second angle β with first virtual plane P1. Further, the second connection profile 26 may include a flat second body part 52 that has a distal edge 52b that is connected to the proximal transition part edge 50a. The second body part 52 may extend in the first virtual plane P1. Again, this flat second body part 52 may be straight, as shown in the example of Figs. 2-4, or may be curved, as shown in the example of Fig. 5.

The second plane P2, in which the support arm 38 of the first connection profile 22 extends, may be parallel to the fourth plane P4, in which the transition part 50 of the second connection profile 26 extends. The distal end 32b of the profile body 32 of the first connection profile 22 may be defined by a distal end wall that extends parallel to the fourth virtual plane P4. The distal end 48b of the first body part 48 of the second connection profile 22 may be defined by a distal end wall that extends parallel to the second virtual plane P2. These configurations provide adhesive 30 accommodating slits with a constant slit width which improves the connection strength.

The support arm 38 and the transition part 50 provide a kind of stop that aids the relative positioning of the first housing shell 12 relative to the second housing shell 14 during the connecting process of these shells 12, 14. Further, by virtue of the transition part 50, the housing shells 12, 14, may extend in the same first virtual plane P1 adjacent the connection assembly 20. Thus a smooth outer housing surface may be obtained even at the connection assembly which may be desirable for cleaning purposes and also for aesthetical considerations. This is clearly visible in Fig. 2.

In an embodiment the first connection profile 22 and the second connection profile 26 may be manufactured by pultrusion. Pultrusion is known per se to the skilled person and is, for example, described in US-3,529,050. In a pultrusion process fibers are impregnated with a plastic resin and are drawn through a forming die for forming an end product, for example a profile. Profiles manufactured with pultrusion can be very strong and stiff.

In an embodiment the first connection profile 22 and the second connection profile 26 may include the same plastic material as the first and the second housing shell 12, 16. This has the advantage that the expansion properties of the connection profiles 22, 26 due to temperature may be the same as the expansion properties of the associated housing shells 12, 16. Thus internal stresses may be avoided. Additionally, the chance of degradation of the parts due to chemical interaction between the substances of the housing shell and the connection profiles is minimized. Further, the bonding between the housing shell 12, 16 and the associated connection profile 22, 28 may be better when the plastic material incorporated in these parts is the same.

In order to obtain an optimal bond between the first connection profile 22 and the first housing shell 12 and between the second connection profile 26 and second housing shell 16 as well as between the first and the second connection profiles 22, 26, an embodiment of the connection profiles 22, 26 may have external surfaces that have a rough texture. The roughness may be in the order of 30-500 µm

### Industrial Applicability

The housing may be applied as a housing for a nacelle of a wind generator. This is just an example of a typical application of such a housing. Housings including housing shells made of composite plastic material may also be applied for accommodating machines, spaces, and the like. A nacelle of a wind generator may be fairly large. Typical dimensions are in the order of 3-8 meters wide and high and 3-13 meter long. In view thereof, the housing will include two or more housing shells that have to be connected to each other with the connection assembly.

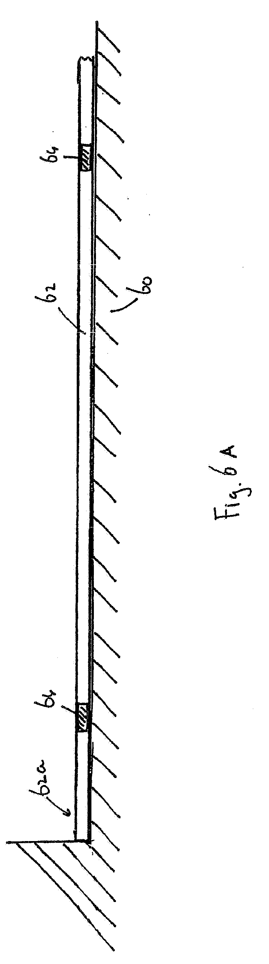

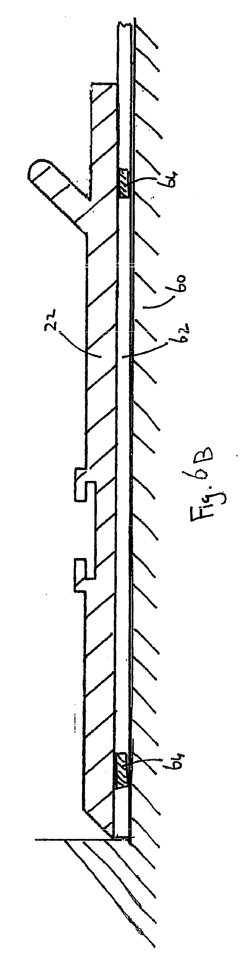

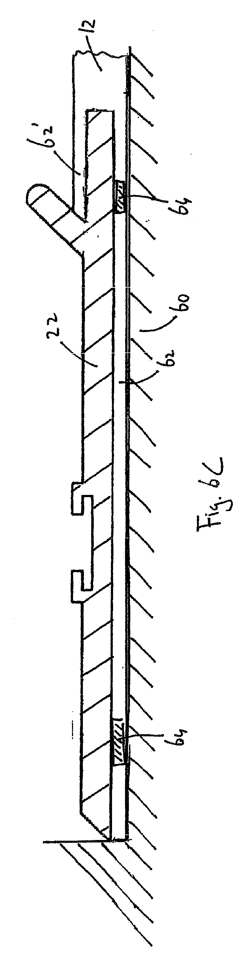

An embodiment for a method of manufacturing the housing will be described with reference to Figs. 6A-6C. The method of manufacturing the housing includes providing a first mold 60 in which a first housing shell 12 will be formed. To that end, a layer 62 of composite plastic material may be applied in the first mold 60 (See Fig 6A). The layer 62 may have a defined thickness adjacent at least one first edge 62a of the layer 62. The defined thickness may be obtained by placing some thickness reference blocks 64 in the mold 60 adjacent positions where the first edge 62a will be formed. Then a first connection profile 22 may be provided and placed in the first mold 60 at the first edge 62a of the layer 62 (see Fig. 6B). Next, additional composite plastic material 62' may be applied in the first mold 60 to form a first housing shell 12 with the first connection profile 22 at least partly embedded therein (see Fig. 6C). Alternatively, the first connection profile 22 may be placed into the mold first. Subsequently, the mold 60 may be filled with a layer 62 of composite plastic material.

After hardening of the composite plastic material, the first housing shell 12 with the first connection profile 22 may be removed from the mold 60. The thickness reference blocks 64 may be embedded in the first housing shell 12.

The embodiment of the method of manufacturing the housing also includes providing a second mold for the formation of second housing shell 16. In an embodiment, the second mold may differ from the first mold 60. In alternative embodiment the second mold may be the same as the first mold 60, especially when the first and second housing shell 12, 16 to be manufactured have the same configuration. In view thereof, the method steps for manufacturing the second housing shell 16 will be described with reference to same Figs. 6A-6B and by using the same reference numbers. In the second mold 60 a layer 62 of composite plastic material will be applied having a defined thickness adjacent at least one second edge 62a of the layer 62. Again thickness reference blocks 64 may be used for obtaining a desired uniform thickness of the layer 62 adjacent the second edge 62a. Next, a second connection profile 26 may be provided and placed in the second mold 60 at the second edge 62a of the layer 62. Then, additional composite plastic material 62' may be applied in the second mold 60 to form a second housing shell 16 with the second connection profile 26 at least partly embedded therein. Alternatively, the second connection profile 26 may be placed in the mold 60 first and subsequently the layer 62 of composite plastic material may be applied in the mold in one step. Again, after hardening the composite plastic material, the second housing shell 16 together with the second connection profile 26 may be removed from the mold 60.

For the formation of the housing, the first and the second housing shell 12, 16 must be connected. Preferably, such connecting is performed at the site where the housing will be used, that is after transportation of the housing shells 12, 16. During transportation, the housing shells 12, 16 with the connection profiles 22, 26 embedded therein may be nested into each other. Because the housing shells 12, 16 and the connection profiles 22, 26 do not include parts that are vulnerable for damage and that impede nested transportation, the transport costs and thus overall costs will be reduced. The housing shells 12, 16 may be quickly and reliably connected via the connection assembly 20 that includes the first and the second connection profiles 22, 26 and an adhesive layer 30 that extends between and connecting the first an the second profile 22, 26, more specifically between the first and the second contact surfaces 24, 28 of the associated first and second connection profiles 22, 26. Connection bolts 40 may be used to form a stable connection between the connection profiles 22, 26 when the adhesive layer 30 has not yet solidified.

As described before in the mounted condition of the housing both the first housing shell 12 adjacent the first housing edge 14 as well as the second housing shell 16 adjacent the second housing edge 18 extend in the first virtual plane P1. Also, the first and second contact surfaces 24, 26 extend in or are parallel to the first virtual plane P1. Because of this configuration, the nesting of the housing shells 12, 16 with the connection profiles 22, 26 embedded therein is possible. Additionally, the surface area of the contact surfaces 24, 26 may be relatively large, thus providing a large area for the formation of the adhesive layer 30. Such a large adhesive layer area will lead to a stable and strong connection between the housing shells 12, 16.

The connection profiles 22, 26, especially when they are manufactured in a pultrusion process, provide rigidity to the edges of the housing shells 12, 16. This is advantageous during assembly of the housing 10 and during handling of the individual housing shells 12, 16. The connection profiles 22, 26 may be 77% lighter than steel and 30% lighter than aluminum. The connection profiles 22, 26 and the housing shells 12, 16 do no conduct electricity, and hardly conduct heat. Thus an electrically isolating housing 10 may be obtained. Magnetic fields do not influence the housing 10. Further, the housing 10 may be corrosion resistant. With a suitable choice of the plastic resin, e.g.polyester resin, for the manufacturing of the housing shells 12, 16 and the connection profiles 22, 26, the housing shells 12, 16 and the connection profiles 22, 26 may also be chemically resistant, for example resistant for acids, bases or other chemically aggressive substances. Additionally, weather conditions, UV-light and temperature fluctuations may have no or negligible influence on the housing 10. Thus the housing 10 requires low maintenance. Finally, the housing shells 12, 16 with the connection profiles 22, 26 embedded therein will be easy to handle because of the light weight and the housing 10 may be assembled with the use of conventional tools.

Although illustrative embodiments of the present invention have been described with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that the particular features, structures, or characteristics may be combined in any suitable manner in one or more embodiments.

## Claims

1. A housing (10) comprising:
• a first housing shell (12) of a composite plastic material having at least one first housing edge (14), the first housing shell adjacent the first housing edge extending in a first virtual plane (P1);
• a second housing shell (16) of a composite plastic material having at least one second housing edge (18), the second housing shell adjacent the second housing edge extending in the first virtual plane (P1);
• a connection assembly (20) configured to connect the first housing edge (14) with the second housing edge (18), the connection assembly including:
• a first connection profile (22) connected with the first housing shell (12) adjacent the first housing edge (14) by being partly embedded in the first housing shell (12), the first connection profile (22) providing a first contact surface (24) extending in or parallel to the first virtual plane (P1);
• a second connection profile (26) connected with the second housing shell (16) adjacent the second housing edge (18) by being partly embedded in the second housing shell (16), the second connection profile (26) providing a second contact surface (28) extending in or parallel to the first virtual plane (P1);
• an adhesive layer (30) extending between and connecting the first and the second profile (22, 26) via the first and the second contact surfaces (24, 28).

2. The housing according to claim 1, the first connection profile (22) including:
• a substantially flat profile body (32) having a proximal edge (32a) that faced to the first housing shell (12) and a distal edge (32b) that is faced away from the first housing part (12), the substantially flat profile body extending in the first virtual plane (P1).

3. The housing according to claim 2, the first connection profile (22) including:
• a support arm (38) having a first edge (38a) via which the support arm (38) is integrally connected with the substantially flat profile body (32) between the proximal edge (32a) and the distal edge (32b) thereof.

4. The housing according to claim 3, the support arm (38) being substantially flat and extending in a second virtual plane (P2) that includes an first angle (α) with the first virtual plane (P1).

5. The housing according to any of the preceding claims, the connection assembly (20) including:
• a connection bolt (40) having a bolt head (42) and a bolt shaft (44); and
• a T-slit integrally (46) formed in the first connection profile (22) and configured to accommodate the bolt head (42).

6. The housing according to any of the preceding claims, the second connection profile (26) including:
• a flat first body part (48) that extends in a third virtual plane (P3) that is parallel to the first virtual plane (P1) and having a proximal edge (48a) that is faced to the second housing shell (16) and a distal edge (48b) that is faced away from the second housing shell (16);
• a transition part (50) having a distal transition part edge (50b) that is connected with the proximal edge (48a) of the first body part (48) and having a proximal transition part edge (50a) that extends parallel to the distal transition part edge (50a) on an opposite side of the transition part (50); and
• a flat second body part (52) having a distal edge (52b) that is connected to the proximal transition part edge (50a), the second body part (52) extending in the first virtual plane (P1).

7. The housing having the features of claims 5 and 6, the first body part (48) of the second connection profile (26) including:
• at least one hole (54) accommodating an associated bolt shaft (44).

8. The housing according to claim 6 or 7, the transition part (50) being substantially flat and extending in a fourth virtual plane (P4) that includes an second angle (β) with first virtual plane (P1).

9. The housing having the features of claims 4 and 8, the second and the fourth plane (P2, P4) being parallel.

10. The housing having the features of claim 2 and 8, the distal end (32b) of the profile body (32) of the first connection profile (22) being defined by a distal end wall that extends parallel to the fourth virtual plane (P4).

11. The housing having the features of claims 4 and 6, the distal end (48b) of the first body part (48) of the second connection profile (22) being defined by a distal end wall that extends parallel to the second virtual plane (P2).

12. The housing according to any of the preceding claims, wherein the first connection profile (22) and the second connection profile (26) are manufactured by pultrusion.

13. The housing according to any of the preceding claims, wherein the first connection profile (22) and the second connection profile (26) include the same plastic material as the first and the second housing shell (12, 16).

14. The housing according to any of the preceding claims, wherein the first and the second connection profiles (22, 26) have external surfaces that have a surface texture with a roughness in the range of 30-500 µm.

15. Method of manufacturing a housing including:
• providing a first mold (60);
• providing a first connection profile (22);
• placing the first connection profile (22) in the first mold (60);
• applying composite plastic material (62) in the first mold (60) to form a first housing shell (12) with the first connection profile (22) at least partly embedded therein at a first housing shell edge (14);
• hardening the composite plastic material; and
• removing the first housing shell (12) with the first connection profile (22) from the mold (60);
• providing a second mold (60);
• providing a second connection profile (26);
• placing the second connection profile (26) in the second mold (60) at the second edge (62a) of the layer (62);
• applying composite plastic material (62) in the second mold (60) to form a second housing shell (16) with the second connection profile (26) at least partly embedded therein at a second housing shell edge (18);
• hardening the composite plastic material; and
• removing the second housing shell (16) with the second connection profile (26) from the mold (60);
• connecting the first and the second housing shell (12, 16) via a connection assembly (20) including the first and the second connection profiles (22, 26) and an adhesive layer (30) extending between and connecting the first an the second profile (22, 26);
wherein the housing in the mounted condition includes that:
• the first housing shell (12) adjacent the first housing shell edge (14) extends in a first virtual plane (P1);
• the second housing shell (16) adjacent the second housing shell edge (18) extends in the first virtual plane (P1);
• the first connection profile (22) provides a first contact surface (24) extending in or parallel to the first virtual plane (P1);
• the second connection profile (26) provides a second contact surface (28) extending in or parallel to the first virtual plane (P1); and that
• the adhesive layer (30) extends between and connects the first and the second contact surfaces (24, 28).
